Europäisches Patentamt

European Patent Office

Office européen des brevets

(19)

(11) Veröffentlichungsnummer: **0 118 777 B1**

(12) **EUROPÄISCHE PATENTSCHRIFT**

(45) Veröffentlichungstag der Patentschrift:
26.08.87

(51) Int. Cl.⁴: **H 04 N 9/82,** H 04 N 5/91

(21) Anmeldenummer: 84101365.9

(22) Anmeldetag: **10.02.84**

(54) **Videorecorder mit Aufzeichnung des Tonsignals.**

(30) Priorität: **15.02.83 DE 3305103**

(43) Veröffentlichungstag der Anmeldung:
**19.09.84 Patentblatt 84/38**

(45) Bekanntmachung des Hinweises auf die Patenterteilung:
**26.08.87 Patentblatt 87/35**

(84) Benannte Vertragsstaaten:
**AT BE CH DE FR GB IT LI LU NL SE**

(56) Entgegenhaltungen:
**EP - A - 0 066 067**
**EP - A - 0 068 188**

(73) Patentinhaber: **TELEFUNKEN Fernseh und Rundfunk GmbH, Göttinger Chaussee 76,
D-3000 Hannover 91 (DE)**

(72) Erfinder: **Kluth, Hans-Jürgen, Ing. grad.,
Weichselstrasse 11, D-7730 VS-Villingen (DE)**

(74) Vertreter: **Einsel, Robert, Dipl.-Ing., TELEFUNKEN Fernseh und Rundfunk GmbH Göttinger Chaussee 76,
D-3000 Hannover 91 (DE)**

## Beschreibung

Bei Videorecordern ist es bekannt, das Tonsignal auf einer parallel zur Bandkante verlaufenden Längsspur mit einem feststehenden Kopf aufzuzeichnen. Wegen der geringen Längsgeschwindigkeit des Videobandes von ca. 20 mm/s kann dabei nur eine geringe Tonqualität erreicht werden, mit der die HiFi-Anforderungen nicht erfüllt werden können.

Zur Verbesserung der Tonaufzeichnung ist es bekannt (EP-A2 0 066 067), einen oder mehrere mit Tonsignalen frequenzmodulierte Tonträger zusammen mit dem mit dem Bildsignal modulierten Bildträger auf den Schrägspuren des Bandes aufzuzeichnen. Die Frequenzen der Tonträger können dabei unterhalb oder innerhalb des von dem Bildträger eingenommenen Frequenzbereiches liegen.

Wenn der oder die Tonträger innerhalb des Frequenzbereiches des modulierten Bildträgers liegen, ist es zur Vermeidung von Störungen zwischen Bildträger und Tonträger notwendig, bei der Aufnahme und bei der Wiedergabe den von dem Tonträger eingenommenen Frequenzbereich im Frequenzspektrum des modulierten Bildträgers zu unterdrücken. Dadurch gehen bei der Bildaufzeichnung bestimmte Frequenzen verloren, so dass je nach Bildinhalt eine Verringerung der Bildschärfe auftreten kann.

Es ist dabei auch bekannt (EP-A2 0 066 067), die Sperrbandbreite des Filters in Abhängigkeit von der Amplitude des Tonsignals so zu steuern, dass sie mit steigender Tonsignalamplitude zunimmt. Dadurch wird also die Sperrbandbreite des Filters jeweils nur auf einen so hohen Wert gesteuert, wie es die jeweilige Amplitude des Tonsignals erfordert. Wenn z.B. kein Tonsignal vorliegt wie bei einer Stummszene, erfolgt überhaupt keine Beeinträchtigung der Bildwiedergabe.

Die Beeinträchtigung der Bildwiedergabe lässt sich auch dadurch verringern, dass für den Tonträger ein geringerer Frequenzhubbereich gewählt wird. Der Frequenzhubbereich des Tonträgers ist jedoch senderseitig vorgegeben, wenn der Tonträger unmittelbar durch Mischung aus einem empfangenen Fernsehsignal abgeleitet wird. Ausserdem wird bei einer Verringerung des Frequenzhubes der Störabstand bei der Tonwiedergabe verringert.

Der Erfindung liegt die Aufgabe zugrunde, bei der Aufzeichnung eines Tonträgers innerhalb des Frequenzbereiches des Bildträgers die Beeinträchtigung der Bildwiedergabe durch den eingeschalteten Tonträger klein zu halten.

Diese Aufgabe wird durch die im Anspruch 1 beschriebene Erfindung gelöst. Vorteilhafte Weiterbildungen der Erfindung sind in den Unteransprüchen beschrieben.

Die Erfindung beruht auf folgender Überlegung. Der modulierte Tonträger nimmt einen bestimmten Frequenzbereich ein, der sich aus dem Modulationshub und der Bandbreite des Tonsignals ergibt. Dieser Frequenzbereich von z.B. 2 MHz ± 50 kHz ist jedoch niemals vollständig belegt. Der wesentliche Energieinhalt innerhalb des Spektrums kann je nach Amplitude des Tonsignals an verschiedenen Stellen dieses Frequenzbereiches liegen. Deshalb ist es möglich, zur Unterdrückung eines entsprechenden Frequenzbereiches im modulierten Bildträger ein Filter mit einer Sperrbandbreite zu verwenden, die kleiner ist als der gesamte Frequenzbereich des Tonträgers, wenn dieser Sperrbereich entsprechend der jeweiligen Augenblicksfrequenz des Tonträgers verschoben wird. Der Sperrbereich des Filters wird also ständig frequenzmässig dort hingeschoben, wo die Frequenz oder die wesentlichen Spektrallinien des frequenzmodulierten Tonträgers liegen.

Durch die erfindungsgemässe Lösung wird der Frequenzbereich des modulierten Bildträgers nur noch so wenig beeinträchtigt, dass die Bildschärfe bei der Wiedergabe praktisch unverändert erhalten bleibt. Als Stellgrösse für die Steuerung des Sperrbereiches kann das NF-Tonsignal selbst verwendet werden, weil dieses in einem proportionalen Zusammenhang zur jeweiligen Frequenz des Tonträgers steht.

Ausführungsbeispiele der Erfindung werden anhand der Zeichnung erläutert. Darin zeigen

Fig. 1 ein Blockschaltbild für die Aufnahme,
Fig. 2 ein Blockschaltbild für die Wiedergabe und
Fig. 3, 4 zwei verschiedene Ausführungsbeispiele für ein steuerbares Filter.

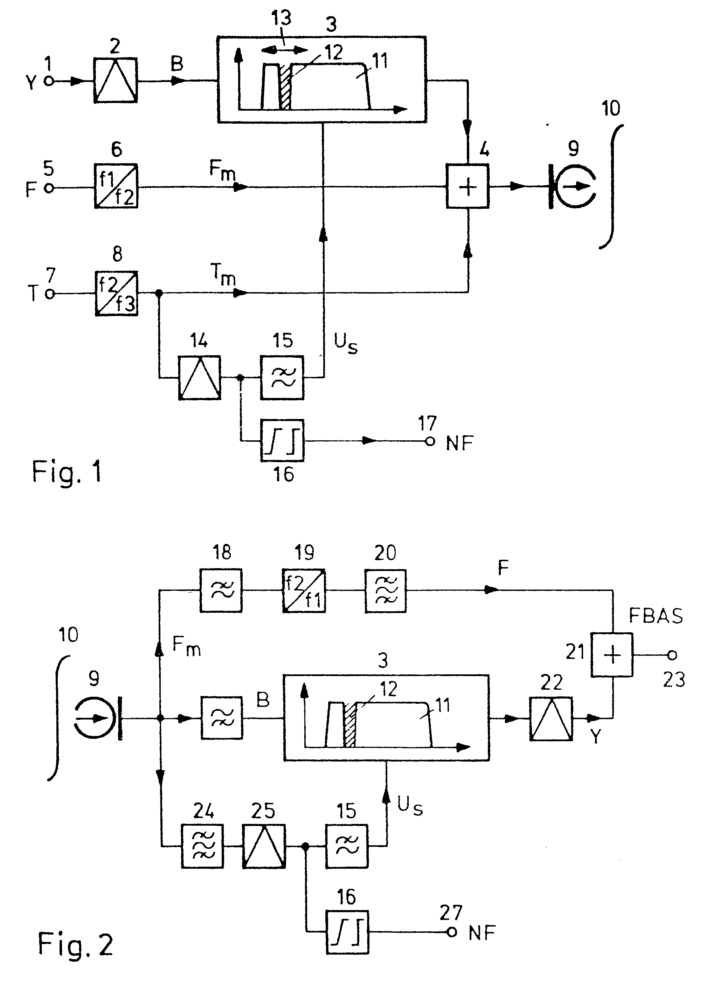

In Figur 1 wird das Leuchtdichtesignal Y von der Klemme 1 dem FM-Modulator 2 zugeführt, der den modulierten Bildträger B erzeugt. Dieser gelangt über das Filter 3 auf die Addierstufe 4. Der Farbträger F von der Klemme 5 wird in dem Frequenzumsetzer 6 von der Frequenz f1 = 4,43 MHz auf eine Frequenz f2 von etwa 630 kHz umgesetzt und als modifizierter Farbträger Fm der Addierstufe 4 zugeführt. Der Tonträger T von der Klemme 7 wird in dem Frequenzumsetzer 8 von 5,5 MHz auf eine Frequenz von 2,0 MHz umgesetzt und als modifizierter Tonträger Tm der Addierstufe 4 zugeführt. Das Ausgangssignal der Addierstufe 4, bestehend aus dem modulierten Bildträger B, dem modifizierten Farbträger Fm und dem modifizierten Tonträger Tm, wird dem Videokopf 9 zugeführt und auf Schrägspuren des Magnetbandes 10 aufgezeichnet.

Das Filter 3 hat einen Durchlassbereich 11, der dem vom Bildträger B eingenommenen Frequenzbereich entspricht. Innerhalb dieses Frequenzbereiches liegt der schraffiert dargestellte Sperrbereich 12 mit einer Breite von 20 kHz bei der Tonträgerfrequenz von 2,0 MHz. Die Lage des Sperrbereiches 12 ist in Richtung des Doppelpfeiles 13 durch eine angelegte Stellgrösse Us verschiebbar, derart, dass der Sperrbereich 12 immer bei der jeweiligen Frequenz oder der Anhäufung von Spektrallinien des Tonträgers Tm liegt. Die Stellgrösse Us wird über den FM-Demodulator 14 und den Tiefpass 15 aus dem Tonträger Tm gewonnen. Der Tiefpass 15 hat eine Grenzfrequenz von etwa 20 kHz und soll verhindern, dass der Sperrbereich 12 durch Störungen höherer Frequenzen oder Rauschen in unerwünschte Frequenzbereiche verschoben wird. Die Ausgangsspannung des FM-Demodulators 14 ist gleichzeitig das NF-Tonsignal und kann über den Entzerrer 16 an der Klemme 17 für eine Tonwiedergabe oder eine zusätzliche Aufzeichnung des Tonsignals auf einer Längsspur verwendet werden.

Figur 2 zeigt die entsprechende Wiedergabeschaltung. Der modifizierte Farbträger Fm wird mit dem Tiefpass 18 mit einer Grenzfrequenz von 700 kHz ausgewertet, mit dem Frequenzumsetzer 19 wieder auf die Frequenz f1 = 4,43 MHz umgesetzt und über den auf diese Frequenz und die Seitenbänder abgestimmten Bandpass 20 als Farbträger F der Addierstufe 21 zugeführt. Der modulierte Bildträger mit einem Frequenzbereich von ca. 1,0–6,0 MHz wird über das Filter 3 geführt, das dem Filter 3 in Figur 1 entspricht. Mit dem Demodulator 22 wird das Leuchtdichtesignal Y gewonnen und der Addierstufe 21 zugeführt. Diese liefert an der Klemme 23 das FBAS-Signal für die Bildwiedergabe. Der Durchlassbereich 11 des Filters 3 enthält wieder den Sperrbereich 12, der entsprechend Figur 1 durch die Stellgrösse Us auf die Augenblicksfrequenz des Tonträgers geschoben wird. Der Tonträger wird mit dem Bandpass 24 selektiv ausgewertet und liefert über den FM-Demodulator 25 und den Tiefpass 15 die Stellgrösse Us und ausserdem über den Entzerrer 16 an der Klemme 27 wieder das NF-Tonsignal für die Tonwiedergabe.

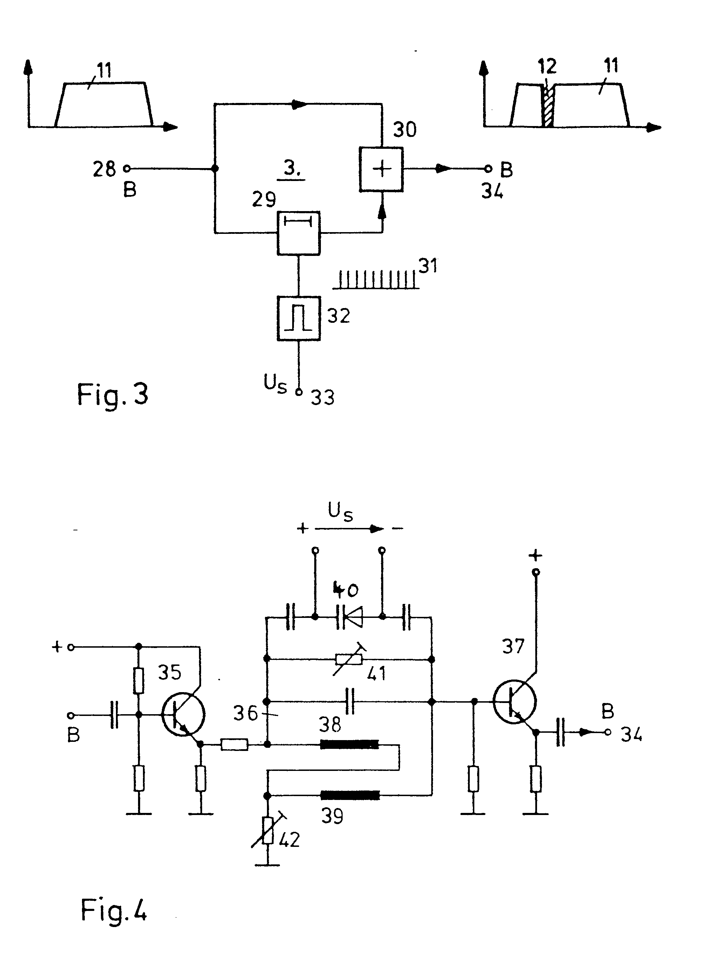

Figur 3 zeigt eine Ausführungsform für das Filter 3 in Figur 1 und 2. Der modulierte Bildträger B mit dem Frequenzbereich 11 wird von der Klemme 28 einmal direkt und einmal über die getaktete Verzögerungsleitung 29 der Addierstufe 30 zugeführt. Die Verzögerungsleitung 29 ist z.B. ein elektronischer getakteter Speicher in Form einer Eimerkette. Die Verzögerungszeit wird bestimmt durch die Frequenz der Taktimpulsfolge 31 von dem Impulsgenerator 32. An dessen Steuereingang 33 ist die Stellgrösse Us angelegt. Us bestimmt die Frequenz der Impulsfolge 31 und damit die Verzögerungszeit der Verzögerungsleitung 29. Die Verzögerungszeit ist so eingestellt, dass sie der halben Periodendauer der Frequenz entspricht, die im Frequenzbereich 11 unterdrückt werden soll. Dadurch entsteht an der Klemme 34 ein Frequenzbereich 11 mit dem gewünschten, durch die Stellgrösse Us verschiebbaren Sperrbereich 12, weil bei der genannten Frequenz die der Addierstufe 30 zugeführten Signale um 180° in der Phase gegeneinander verschoben sind und einander auslöschen. Für die übrigen Frequenzen erfolgt diese Auslöschung nicht, weil für diese Frequenzen die Verzögerungszeit der Verzögerungsleitung 29 nicht gleich der halben Periodendauer ist. Da die Schaltung nach Figur 3 ein Kammfilter darstellt, werden auch Vielfache des zu unterdrückenden Trägers ausgefiltert, im Beispiel also: 2, 4, 6 MHz usw.

Figur 4 zeigt ein notch-Filter mit einem Sperrkreis aus diskreten Bauelementen, das ebenfalls die Funktion des Filters gemäss Figur 3 erfüllt. Der Bildträger B wird über die Emitterfolger-Transistorstufe 35 dem auf die Frequenz des Tonträgers von 2,0 MHz abgestimmten als Sperrkreis wirkenden Schwingkreis 36 zugeführt, der über eine weitere Emitterfolger-Stufe 37 mit der Ausgangsklemme 34 verbunden ist. Die Induktivität des Sperrkreises 36 besteht aus den beiden gleichen Wicklungen 38, 39, die als Bifilarwicklungen ausgebildet sind. Der Schwingkreis 36 enthält die Kapazitätsdiode 40, an die die Stellgrösse Us angelegt ist. Die Stellgrösse Us ist als Sperrspannung an der Kapazitätsdiode 40 wirksam und steuert dessen Kapazität und damit die Sperrfrequenz des Schwingkreises 36 in der oben beschriebenen Weise derart, dass in dem Bildträger B an der Klemme 34 die Sperrstelle 12 auftritt. Mit den Widerständen 41, 42 sind die Dämpfung des Sperrkreises 36 und damit die Breite des Sperrbereiches 12 einstellbar.

Die erfindungsgemässe Schaltung ist grundsätzlich bei einem oder auch bei mehreren Tonträgern gleichzeitig anwendbar. Bei mehreren Tonträgern, z.B. mit den Frequenzen von 1,7 und 1,9 MHz, sind entsprechend zwei Filter mit gesteuerten Sperrbereichen 12 oder ein gemeinsames Filter mit zwei gesteuerten Sperrbereichen 12 in den Weg des Bildträgers B eingeschaltet. Durch die Erfindung kann die Breite des Sperrbereiches 13 gegenüber bekannten Schaltungen z.B. von einem Wert in der Grössenordnung von 50–70 kHz auf Werte in der Grössenordnung von 20–25 KHz verringert werden.

**Patentansprüche**

1. Videorecorder mit Aufzeichnung des Tonsignals, bei dem ein frequenzmodulierter Tonträger (Tm) innerhalb des vom Bildträger (B) eingenommenen Frequenzbereiches (11) aufgezeichnet wird, in welchem der vom Tonträger (Tm) eingenommene Frequenzbereich mit einem einen Sperrbereich (12) aufweisenden Filter (3) unterdrückt ist, dadurch gekennzeichnet, dass die Frequenzlage des Sperrbereiches (12) des Filters (3) durch eine Stellgrösse (Us) so gesteuert ist, dass der Sperrbereich (12) immer etwa bei der Augenblicksfrequenz des frequenzmodulierten Tonträgers (Tm) oder bei dessen wesentlichen Spektrallinien liegt.

2. Recorder nach Anspruch 1, dadurch gekennzeichnet, dass der Sperrbereich (12) schmaler ist als der Frequenzhubbereich des Tonträgers (Tm).

3. Recorder nach Anspruch 1, dadurch gekennzeichnet, dass der Sperrbereich eine Breite von etwa 20 kHz hat.

4. Recorder nach Anspruch 1, dadurch gekennzeichnet, dass die Stellgrösse (Us) durch Frequenzdemodulation des Tonträgers (Tm) gewonnen ist.

5. Recorder nach Anspruch 1, dadurch gekennzeichnet, dass die Stellgrösse (Us) das NF-Tonsignal (NF) ist.

6. Recorder nach Anspruch 1, dadurch gekennzeichnet, dass die Stellgrösse (Us) dem Filter (3) über einen Tiefpass (15) zugeführt ist.

7. Recorder nach Anspruch 6, dadurch gekennzeichnet, dass der Tiefpass (15) eine Grenzfrequenz von ca. 20 kHz hat.

8. Recorder nach Anspruch 1, dadurch gekennzeichnet, dass das Filter (3) ein Kammfilter mit einem steuerbaren Verzögerungsglied (29) ist, dessen Verzögerungszeit durch die Stellgrösse (Us) gesteuert ist (Fig. 3).

9. Recorder nach Anspruch 1, dadurch gekennzeichnet, dass das Filter (3) einen Sperrkreis (36) mit einer durch die Stellgrösse (Us) gesteuerten Kapazitätsdiode (40) enthält (Fig. 4).

10. Recorder nach Anspruch 5, dadurch gekennzeichnet, dass die Stellgrösse (Us) vor einer Deemphasis-Stufe (16) für das NF-Tonsignal (NF) abgeleitet ist.

## Claims

1. Video recorder in which recording of the sound signal is such that a frequency modulated sound carrier (Tm) is recorded within the frequency range (11) occupied by the picture carrier (B), in which the frequency range occupied by the sound carrier (Tm) is suppressed by a filter (3) exhibiting a blocking band (12), characterized in that the frequency position of the blocking band (12) of the filter (3) is controlled by a control magnitude (Us) so that the blocking band (12) lies close to the momentary frequency of the frequency modulated sound carrier (Tm) or principal spectral lines thereof.

2. Recorder according to Claim 1, characterized in that the blocking band (12) is narrower than the frequency shift band of the sound carrier (Tm).

3. Recorder according to Claim 1, characterized in that the blocking band has a width of about 20 kHz.

4. Recorder according to Claim 1, characterized in that the control magnitude (Us) is derived by frequency modulation of the sound carrier (Tm).

5. Recorder according to Claim 1, characterized in that the control magnitude (Us) is the low frequency sound signal (NF).

6. Recorder according to Claim 1, characterized in that the control magnitude (Us) is applied to the filter (3) by way of a low pass (15).

7. Recorder according to Claim 6, characterized in that the low pass (15) has a boundary frequency of about 20 kHz.

8. Recorder according to Claim 1, characterized in that the filter (3) is a comb filter with a controllable delay member (29), the delay time of which is controlled by the control magnitude (Us) (Fig. 3).

9. Recorder according to Claim 1, characterized in that the filter (3) includes a blocking circuit (36) having a capacity diode (40) controlled by the control magnitude (Us) (Fig. 4).

10. Recorder according to Claim 1, characterized in that the control magnitude (Us) is derived from a de-emphasis stage (16) for the low frequency sound signal (NF).

## Revendications

1. Enregistreur vidéo à enregistrement du signal acoustique, dans lequel une porteuse son (Tm), modulée en fréquences est enregistrée à l'intérieur de la plage des fréquences (11) occupée par la porteuse d'image (B) et dans lequel la plage des fréquences occupée par la porteuse son (Tm) est supprimée par un filtre (3) présentant une bande de blocage (12), caractérisé par le fait que la position de fréquence de la bande de blocage (12) du filtre (3) est commandée par une grandeur de réglage (Us) de telle sorte que la bande de blocage (12) est toujours située approximativement au niveau de la fréquence instantanée de la porteuse de son (Tm) modulée en fréquence ou au niveau des raies spectrales importantes de cette porteuse.

2. Enregistreur suivant la revendication 1, caractérisé par le fait que la bande de blocage (12) est plus étroite que la plage d'excursion de fréquence de la porteuse son (Tm).

3. Enregistreur suivant la revendication 1, caractérisé par le fait que la bande de blocage possède une largeur d'environ 20 kHz.

4. Enregistreur suivant la revendication 1, caractérisé par le fait que la grandeur de réglage (Us) est obtenue par démodulation de fréquence de la porteuse son (Tm).

5. Enregistreur suivant la revendication 1, caractérisé par le fait que la grandeur de réglage (Us) est le signal acoustique à basse fréquence (NF).

6. Enregistreur suivant la revendication 1, caractérisé par le fait que la grandeur de réglage (Us) est envoyée au filtre (3) par l'intermédiaire d'un filtre passe-bas (15).

7. Enregistreur suivant la revendication 6, caractérisé par le fait que le filtre passe-bas (15) possède une fréquence limite d'environ 20 kHz.

8. Enregistreur suivant la revendication 1, caractérisé par le fait que le filtre (3) est un filtre en peigne possédant un circuit de retard (29) commandable, dont le temps de retard est commandé par la grandeur de réglage (Us) (figure 3).

9. Enregistreur suivant la revendication 1, caractérisé par le fait que le filtre (3) contient un circuit de blocage (36) possédant une diode capacitive (40) commandée par la grandeur de réglage (Us) (figure 4).

10. Enregistreur suivant la revendication 5, caractérisé par le fait que la grandeur de réglage (Us) est dérivée en amont d'un étage (16) de désaccentuation prévu pour le signal acoustique à basse fréquence (NF).

0118777

Fig. 1

Fig. 2

5

Fig. 3

Fig. 4